# EUROPEAN PATENT APPLICATION

(11) **EP 1 477 072 A1**
(43) Date of publication of application: **17.11.2004**
(21) Application number: 03253080.0
(22) Date of filing: 16.05.2003
(51) Int. Cl.: A23L 1/22, A23L 1/24, A23D 7/015, A23L 1/30

(54) **Reduced fat foodstuff with improved flavour**

(71) Applicant: CERESTAR HOLDING B.V., 4551 LA Sas Van Gent (NL)
(72) Inventor: McBride, Christine, Crown Point, Indiana (US)
(74) Representative: Knowles, James Atherton

(57) **Abstract**

The reduced fat foodstuff or no fat foodstuff uses cyclodextrin, either complexed with a flavor or uncomplexed, to improve the flavor of the foodstuff. The reduced fat foodstuff can also be made with a combined cyclodextrin and conventional fat replacer to provide an improved flavor.

## Description

### BACKGROUND OF THE INVENTION

### 1. Field of the Invention

The present invention relates to foodstuff and, more particularly, to reduced fat and no fat foodstuff and a method for making reduced fat and no fat foodstuff with improved flavor. The present invention is especially useful for making reduced fat salad dressings, cookies and frozen dairy products.

### 2. Art Related to the Invention

Consumer awareness of the caloric content of foods has increased dramatically over the past few years and has brought about a demand for foods having reduced fat and no fat. This demand has created a need in the food industry to replace all or at least a portion of the fat and/or oil in prepared foodstuff with a component (a fat replacer) that does not detract from the taste, appearance, smell and mouth feel of the foodstuff while still reducing the caloric content of the foodstuff.

A problem with reduced fat or no fat foodstuff is the loss of flavor associated with the loss of fat. Fat replacers must simulate a number of the properties of fat, however, they generally do not adequately simulate the flavor controlling properties of fat. Hence, reduced fat or no fat foodstuff often tastes bad. Attempts have been made to use conventional flavor carriers in conjunction with fat replacers in reduced fat and no fat foodstuff, but they have not been completely successful.

There is a need for enhancing the flavor of reduced fat and no fat foodstuff without detracting from the taste, appearance, smell and mouth feel of the foodstuff.

### SUMMARY OF THE INVENTION

It has been discovered that the use of cyclodextrin in a prepared foodstuff with reduced fat and no fat leads to an enhanced flavor. Furthermore, it has been found that the cyclodextrin can be added as either a complex with a flavor or as an uncomplexed component or as a combination of both complex and uncomplexed component to the reduced fat and no fat foodstuff to enhance the flavor of the foodstuff without having a deleterious effect on the reduced fat and no fat foodstuff. This enhanced flavor has been especially noted in reduced fat and no fat salad dressings, cookies and frozen dairy products.

Preferably, in order to make a reduced fat and no fat foodstuff with enhanced flavor in accordance with the present invention, a flavor used to make said foodstuff is mixed with an effective amount of cyclodextrin so as to form complexes between the flavor and the cyclodextrin. Then, the complexes are combined with a reduced fat or no fat foodstuff.

In one embodiment, all or a portion of the fat and/or oil contained in the foodstuff has been replaced with a conventional fat replacer along with the cyclodextrin to provide a reduced fat or no fat foodstuff with an enhanced flavor.

Alternatively, cyclodextrin is added during the formulation of the no fat or low fat foodstuff in order to obtain an enhanced flavor in the low fat or no fat foodstuff.

The present invention can also be characterized as an improvement in the method for making a reduced fat or no fat foodstuff wherein at least a portion of the fat and/or oil in an oil and/or fat containing foodstuff is replaced with a fat replacer, the improvement comprising using cyclodextrin in combination with said fat replacer to make said reduced fat foodstuff and obtain an improved flavor.

The present invention also relates to a fat replacer composition comprising a fat replacer and cyclodextrin. The cyclodextrin can be uncomplexed and/or complexed with a flavor. Suitably, the flavor is one which is compatible with a reduced fat or no fat foodstuff which employs the fat replacer composition of the present invention.

The reduced fat salad dressings of the present invention comprise water, vinegar, seasonings, and cyclodextrin, complexed with a flavor from the seasonings and/or uncomplexed.

The reduced fat or no fat cookies of the present invention comprise water, flour, sugar, eggs, flavorings, a fat replacer and cyclodextrin, complexed with a flavor from the flavorings, and/or uncomplexed.

The reduced fat or no fat frozen dairy products of the present invention comprise water, milk, sugar, flavorings, a fat replacer and cyclodextrin, complexed with a flavor from the flavorings, and/or uncomplexed.

The reasons for why the cyclodextrin enhances the flavor in a reduced fat or no fat foodstuff is not completely understood. It is known that flavors in lipid systems have a lower equilibrium vapor pressure when compared to flavors in aqueous food systems. Cyclodextrins may encapsulate the flavor and slow the release of the flavor, very similar to the slow release of volatile flavors controlled by the lipids in a full fat food system. Many of the flavors used in full fat food products are oil soluble and require oil to dissolve and disperse the flavor in the food product. Cyclodextrins may increase the solubility of these flavors upon encapsulation to give better dispersion of the flavor in the food product. In addition, the oil itself may coat the flavor and offer a slow release of flavor. Water soluble or partially water soluble flavors, commonly used in no fat food products, have a quicker flavor release and a more intense flavor release followed by a rapid loss of flavor in a no fat or reduced fat food system. Cyclodextrins provide the needed controlled release, solubility and dispersion for substantial flavor in no fat or reduced fat foodstuff.

### DETAILED DESCRIPTION OF THE INVENTION

Replacing the fat and/or oil in order to make a reduced fat or no fat foodstuff in accordance with the present invention is accomplished by replacing all or at least a portion of the fat and/or oil used in formulating the foodstuff with cyclodextrin along with a conventional fat replacer.

Suitably, the amount of cyclodextrin used in the reduced fat foodstuff in accordance with the present invention is effective to enhance the flavor of the foodstuff. Suitably, the foodstuff contains about 0.01% to about 5% by weight cyclodextrin based on the total weight of the foodstuff and, more preferably, about 0.1% to about 2% by weight. This is based on the weight of uncomplexed cyclodextrin in the foodstuff. The cyclodextrin can be added in uncomplexed and/or complexed form. Typically, a complex contains about 7% to about 10% by weight flavor. The exact amount of complex and/or uncomplexed cyclodextrin added during formulation of the foodstuff will vary depending on the particular flavor because different flavors have different intensities.

The cyclodextrin used in the present invention is alpha, beta, gamma, a modified cyclodextrin or a mixture thereof. Preferably, the cyclodextrin is chosen to best enhance the flavor of the foodstuff. A mixture of cyclodextrin and modified cyclodextrin may be best for the variety of flavors which can be found in foodstuffs.

Cyclodextrins are conventional and any conventional source of cyclodextrins can be used in the present invention.

Cyclodextrins are oligomers of anhydroglucose, bonded together by alpha 1,4 bonds to form a ringed compound. A six membered ring is called alpha cyclodextrin; seven, beta cyclodextrin; and eight, gamma cyclodextrin. Conventionally, cyclodextrins are obtained by treating a starch slurry with enzyme or acid to produce a gelatinized and liquefied starch slurry having a dextrose equivalent between 1 and 10. The gelatinized and liquefied starch slurry is then treated with cyclodextrin glycosyltransferase (CGT), at the appropriate pH, temperature and time for the selected CGT. The resulting digest from treatment of a gelatinized and liquefied starch slurry with CGT is then subjected to a separation and purification process to obtain cyclodextrins.

Cyclodextrins are known to form inclusion complexes and their use to form inclusion complexes with flavors are known, for example, coffee flavor; dimethyl sulfide for fish; vinegar; and spearmint oil, however, they have not been employed with fat replacers and have not been employed in reduced fat and no fat prepared foodstuff.

The term "foodstuff" as used in the specification and claims means prepared foods that have been formulated from more than one component. Examples of such foodstuff are spoonable and pourable salad dressings, frozen dairy products or frozen novelties, ice cream, whipping toppings, icings, sauces, hot dogs, sausage, sandwich meats, yogurt, snack foods, cheese substitutes and imitation cheese.

Typically, formulated foodstuff contain up to about 80% by weight fat and/or oil. Preferably, in any foodstuffs formulated with a fat and/or oil, up to about 50% by weight of the fat and/or oil is replaced with a fat replacer comprising cyclodextrin and a conventional fat replacer. More preferably, up to about 100% of the fat and/or oil is replaced in accordance with the present invention. The use of cyclodextrin in a low fat and/or no fat foodstuff in accordance with the present invention includes foodstuff where no fat replacer has been employed in formulating the foodstuff.

Any conventional fat replacer can be combined with the cyclodextrin in accordance with the present invention. Suitable other conventional fat replacers include starch based fat replacers and starch hydrolysates such as the one taught in U.S. Patent 5,094,874 dated March 10, 1992. Other suitable fat replacers include AVICEL®, polydextrose, maltodextrins, pea fiber, FRUITRIM® and OATRIM®.

The fat replacer composition of the present invention can be premade by combining uncomplexed and/or complexed cyclodextrin with the fat replacer. The food manufacturer then employs the fat replacer composition when formulating the foodstuff. In making the combined fat replacer and uncomplexed cyclodextrin, the ingredients are suitably mixed together to form an homogeneous mixture. Where the cyclodextrin is complexed with a flavor, the complex of cyclodextrin and flavor is first formed and then the complex mixed with the fat replacer.

Formation of the fat replacer composition comprising the uncomplexed cyclodextrin and fat replacer or the composition comprising the complexed cyclodextrin with flavoring/seasoning and fat replacer is accomplished in a conventional manner using conventional equipment. Suitably, the components are dry mixed together with conventional mixing equipment so as to form a uniform mixture.

Suitably, the amount of cyclodextrin in the fat replacer composition of the present invention is up to about 10% by weight based on the fat replacer composition. The remaining 90% or more is the conventional fat replacer and flavoring in the case of complexed cyclodextrin. This is based on the weight of cyclodextrin itself.

The fat replacer composition is then combined with the foodstuff to make a reduced fat foodstuff by replacing at least a portion of the fat/oil in the fat/oil containing foodstuff with the composition of the present invention.

Alternatively, the cyclodextrin can be complexed with the flavor of the foodstuff first and the complex added to the foodstuff with or without the fat replacer.

Complexation is accomplished in a conventional manner using conventional equipment. Suitably, the cyclodextrin is mixed with the flavor in a 2:1 molar ratio and, more preferably, a 1:1 molar ratio. Suitably, an aqueous precipitation method is employed or an aqueous mix is formed and the mix is spray dried to form a dry powder.

Yet another alternative, the uncomplexed cyclodextrin along with the other components with or without a fat replacer is combined to make the no fat or low fat foodstuff to improve flavor. When a fat replacer is employed, at least a portion of the fat/oil used to make the fat/oil containing foodstuff has been replaced with the conventional fat replacer.

It has been found that in a cold processed system, the encapsulation of the flavors can be pre-encapsulated by any known cyclodextrin complexation method and then added by the same mechanism that any flavor is added. In cooked aqueous food systems, precomplexed flavors (flavors complexed with cyclodextrin beforehand) can be used or the flavor can be complexed during the normal preparation of the finished food product, therefore, a separate complexation step is not necessary.

The reduced fat or no fat salad dressing of the present invention employs conventional amounts and conventional sources of water, vinegar and seasonings, a reduced amount of oil or no oil, and an effective amount of cyclodextrin to enhance the flavor of the salad dressing. Optionally, a fat replacer can be added to counteract the reduced amount of oil or the absence of oil from the formulation. Starches or other thickening agents and emulsifiers can be added to make a spoonable salad dressing. The cyclodextrin can be complexed with a flavor from the seasoning beforehand, or uncomplexed. Suitably, the amount of cyclodextrin employed is about 0.01% to about 5% by weight and, more preferably, about 0.1% to about 2% by weight.

The salad dressing of the present invention is formulated in a conventional manner using conventional equipment except for the addition of cyclodextrin and optional fat replacer which are added along with the other components to make the foodstuff. The cyclodextrin and optional fat replacer are added separately, or as a composition. In either case, the cyclodextrin can be uncomplexed or complexed with a compatible flavoring beforehand. The flavoring is compatible with the seasonings used to formulate the salad dressing.

The reduced fat or no fat cookies of the present invention employ conventional amounts and conventional sources of water, flour, eggs, sugar, flavorings, a reduced amount of fat or oil, a fat replacer to counteract the reduced amount of fat or oil, or the absence of fat or oil in the formulation and an effective amount of cyclodextrin to enhance the flavor of the cookies. The cyclodextrin can be complexed with a flavor from the flavoring beforehand, or uncomplexed. Suitably, the amount of cyclodextrin employed is about 0.01% to about 5% by weight and, more preferably, about 0.1% to about 2% by weight.

The cookies of the present invention are formulated and baked in a conventional manner using conventional equipment except for the addition of the fat replacer and the cyclodextrin which are added along with the other components to make the cookies. The fat replacer and cyclodextrin are added either separately or as a composition. The cyclodextrin is either complexed with a flavoring beforehand, or uncomplexed.

The reduced fat or no fat frozen dairy product of the present invention employs conventional amounts and conventional sources of water, milk, sugar, flavorings, and a reduced amount or an absence of fats and/or oils in the formulation and an effective amount of cyclodextrin to enhance the flavor of the product. The cyclodextrin can be complexed with a flavor from the flavoring beforehand, or uncomplexed. Suitably, the amount of cyclodextrin employed is about 0.01% to about 5% by weight and, more preferably, about 0.1% to about 2% by weight.

The frozen dairy product of the present invention is formulated and frozen in a conventional manner using conventional equipment except for the addition of the fat replacer and the cyclodextrin which are added along with the other components to make the dairy product (novelty). The fat replacer and cyclodextrin are added either separately or as a composition. The cyclodextrin is either complexed with a flavoring beforehand, or uncomplexed.

These and other aspects of the present invention may be more fully understood by reference to one or more of the following examples.

### EXAMPLE 1

This example illustrates using cyclodextrin in a no fat foodstuff in accordance with the present invention, namely, a no fat salad dressing and the improved flavor obtained by using cyclodextrin in the formulation.

The following ingredients were used to make a reduced fat Caesar salad dressing:

| | Weight (gram) | |
|---|---|---|
| Ingredients | Present Invention | Conventional |
| Water | 50.59 | 50.59 |
| Caesar Dressing Mix¹ | 13.55 | 13.55 |
| Dual Modified Pre-gelled Starch² | 3.0 | 3.0 |
| 10 DE Maltodextrin³. | 0.2 | 0.2 |
| High Fructose Corn Syrup⁴ | 4.0 | 4.0 |
| 120 Grain Vinegar | 18.6 | 18.6 |
| Sodium Benzoate | 0.1 | 0.1 |
| Potassium Sorbate | 0.1 | 0.1 |
| Beta Cyclodextrin (BCD) | 1.86 | - |

| | | |
|---|---|---|
| ¹Milwaukee Seasoning Mix S85317 excluding starch and maltodextrin | | |
| ²Cerestar USA C*PolarTex Instant 12641 | | |
| ³Cerestar USA C*Dry MD 01960 | | |
| ⁴Cerestar USA C*TruSweet | | |

In order to formulate the dressing of the present invention, the cyclodextrin was mixed with the vinegar (flavor component), heated to 80°F (27°C) and then cooled. Then, all the other ingredients were mixed, first the dry then the wet added and mixed for 5 to 10 minutes. Finally, the vinegar and cyclodextrin were added and mixed in. The conventional salad dressing was made in the same manner without cyclodextrin. As can be seen, the conventional salad dressing is a no fat salad dressing.

These two no fat salad dressings were compared by a sensory panel.

The sensory panel consisted of personnel trained in sensory evaluation techniques. The panelists were not specialists in any particular flavor or application. The panel rating results are reported as average scores from a minimum of 20 panelists to a maximum of 26 panelists.

All sensory evaluations were performed as a blind analysis, with samples assigned a random three-digit number and with the samples rotated for random presentation in accordance with ASTM Committee E18 recommendations.

Sixty-three percent of the sensory panelists preferred the no fat salad dressing made with cyclodextrin compared to the control no fat salad dressing. Analysis of the flavor profile of the sensory evaluation indicates that the preference was a result of a combination of three characteristics. The acidity level was decreased with cyclodextrin. This is the major complaint of consumers of no fat dressings. The acidity of the dressing made with cyclodextrin receives a rating of 6.3 compared to the rating of 5.0 for the control dressing. The flavor balance was also improved. Consumers of no fat/low food products cite this as an objection of consuming no/low food products. The rating of the flavor balance was 6.3 of the dressing with cyclodextrin compared to a much lower rating of 3.5 for the control dressing. The high rating of a clean flavor is also a significant contribution to the high percent of panelists who preferred the dressing made with cyclodextrin. The characteristic of clean flavor received a rating of 6.8 compared to the rating received by the control dressing of 4.5.

### EXAMPLE 2

This example illustrates a frozen dairy product (frozen novelty) in accordance with the present invention. Two formulations are compared.

| Ingredients | Control % | 50% Fat Replaced Test% |
|---|---|---|
| Butter, unsweetened | 15.6 | 7.8 |
| Milk, 3.5% fat | 15.6 | 7.8 |
| Non-fat dried milk | 9.6 | 10.5 |
| Sugar | 12.0 | 12.0 |
| Corn syrup 43/42 | 4.0 | 4.0 |
| Sea Kem OP 418 | 0.2 | 0.2 |
| 10 DE maltodextrin | - | 4.5 |
| Water | 43.0 | 47.2 |
| High amylose starch hydrolysate | - | 5.5 |
| Cyclodextrin | - | 0.5 |

The high amylose starch hydrolysate is a paste made from a high amylose starch hydrolysate wherein the DE is 8.6 and the apparent amylose content of the base starch is about 60%. The paste is made by forming an aqueous dispersion at a solids content of 25% by weight, heating the dispersion to about 100°C and holding the dispersion at that temperature for about 5 minutes. The dispersion is stirred constantly during heating. Such a material is known as a conventional fat replacer and is taught in U.S. Patent 5,094,872.

The 10 DE maltodextrin is made from a waxy corn starch using a bacterial alpha amylose to convent the starch aqueous slurry to a 10 DE starch hydrolysate which is subsequently spray dried to a powder. The maltodextrin and starch hydrolysate act as a fat replacer.

Both formulations are prepared by adding the pre-blended dry components to the butter, milk, water and corn syrup. The mix is then pasteurized, homogenized, cooled to 4°C and aged for 24 hours. The mix is then processed in an ice cream maker. The fat replacer, maltodextrin and uncomplexed cyclodextrin are combined with the butter, milk, water and corn syrup initially.

### EXAMPLE 3

This example illustrates making a chocolate chip cookie in accordance with the present invention. The cookies are formulated as follows:

| Ingredients | Control % | 95% Fat Replaced Test % |
|---|---|---|
| Brown sugar | 11.64 | 11.64 |
| Sugar | 5.21 | 5.21 |
| Frodex 55 | 6.39 | 6.39 |
| Salt | .48 | .48 |
| Non-fat dried milk | 1.42 | 1.42 |
| Vegetable shortening | 15.33 | .77 |
| Conventional fat replacer | - | 14.0 |
| Cyclodextrin | - | .56 |
| Lecithin | .3 | .3 |
| Whole eggs | 11.36 | 11.36 |
| Water | 8.12 | 8.12 |
| Vanilla flavor, 10X | .01 | .01 |
| Baking soda | .25 | .25 |
| Instant Polar Gel 'C' | 4.27 | 4.27 |
| Cake flour | 19.22 | 19.22 |
| Chocolate chips, 2000 ct. | 16.00 | 16.00 |

The numbers are based on the percent by weight formulation. The conventional fat replacer used in this formulation is the high amylose starch hydrolysate used in Example 2 above.

The cookies are made by creaming the sugar and shortening and then adding the dry ingredients to the creamed mixture. Then the liquid together with the conventional fat replacer and uncomplexed cyclodextrin is added and mixed in. Finally, the chocolate chips are added and the dough is dispersed and baked in a 190°C oven for about 12 minutes.

It will be understood that the claims are intended to cover all changes and modifications of the preferred embodiments of the invention herein chosen for the purpose of illustration which do not constitute a departure from the spirit and scope of the invention.

## Claims

1. A method for preparing a reduced fat or no fat foodstuff with enhanced flavor comprising:
replacing at least a portion of the fat and/or oil in a fat and/or oil containing foodstuff with a fat replacer and cyclodextrin wherein said cyclodextrin is present in an amount effective to enhance the flavor of the reduced fat foodstuff.

2. The method of claim 1 wherein the amount of cyclodextrin is about 0.01% to about 5% based on weight of the foodstuff.

3. The method of claim 1 wherein said cyclodextrin is mixed with a flavor component of said foodstuff to form a complex, and subsequently said complex is added to said foodstuff.

4. The method of claim 1 wherein said cyclodextrin is selected from the group of alpha, beta, gamma, modified and mixtures thereof.

5. A method for enhancing the flavor of a no fat or reduced fat foodstuff comprising:
mixing a flavor used to make said foodstuff with an effective amount of cyclodextrin so as to form complexes between said flavor and said cyclodextrin; and
adding said complex to said foodstuff to provide a no fat or reduced fat foodstuff with enhanced flavor.

6. The method of claim 5 wherein the amount of cyclodextrin is about 0.01% to about 5% based on weight of the foodstuff.

7. The method of claim 5 wherein said cyclodextrin is selected from the group of alpha, beta, gamma, modified and mixtures thereof.

8. The method of claim 1 wherein said fat replacer and cyclodextrin are first mixed together to form a mixture and subsequently said mixture is added to said foodstuff.

9. The method of claim 8 wherein the amount of cyclodextrin in said mixture is up to about 10% by weight mixture.

10. The method of claim 8 wherein said cyclodextrin is mixed with a flavor component of said foodstuff to form a complex, and subsequently said complex is mixed with said fat replacer to form said mixture.

11. The method of claim 8 wherein said cyclodextrin is selected from the group of alpha, beta, gamma, modified and mixtures thereof.

12. A fat replacer composition for foodstuff comprising a combination of cyclodextrin and fat replacer.

13. The composition of claim 12 wherein the cyclodextrin is present in an amount of up to about 10% by weight of said fat replacer composition.

14. The composition of claim 12 wherein said fat replacer is selected from the group consisting of starch hydrolysates, polydextrose, maltodextrin, pea fiber, AVICEL®, FRUITRIM® and OATRIM®.

15. The composition of claim 12 wherein the cyclodextrin is selected from the group consisting of alpha, beta, gamma, modified and mixtures thereof.

16. A reduced fat salad dressing comprising water, vinegar, seasoning, and cyclodextrin.

17. A reduced fat cookie comprising water, flour, egg, sugar, flavoring, a fat replacer and cyclodextrin.

18. A reduced fat frozen dairy product comprising water, milk, sugar, flavoring, a fat replacer and cyclodextrin.

19. A method for preparing a reduced fat or no fat foodstuff with enhanced flavor comprising adding an effective amount of cyclodextrin to a reduced fat or no fat foodstuff during preparation of said foodstuff to enhance the flavor of said foodstuff.

20. The method of claim 19 wherein the amount of cyclodextrin added to said foodstuff is about 0.01% to about 5% based on weight of the foodstuff.
